# EUROPÄISCHE PATENTSCHRIFT

(11) **EP 1 745 088 B1**
(45) Veröffentlichungstag und Bekanntmachung des Hinweises auf die Patenterteilung: **18.09.2013**
(21) Anmeldenummer: 05761197.2
(22) Anmeldetag: 12.05.2005
(51) Int. Cl.: C08J 3/03, C08L 83/04

(54) **VERFAHREN ZUR DISKONTINUIERLICHEN HERSTELLUNG VON SILICON-EMULSIONEN**
METHOD FOR THE DISCONTINUOUS PRODUCTION OF SILICONE EMULSIONS
PROCEDE POUR LA PRODUCTION EN DISCONTINU D'EMULSIONS DE SILICONE

(30) Priorität: 13.05.2004 DE 102004023911
(43) Veröffentlichungstag der Anmeldung: 24.01.2007
(73) Patentinhaber: Wacker Chemie AG, 81737 München (DE)
(72) Erfinder: SCHNEIDER, Otto, 84489 Burghausen (DE); SCHRÖCK, Robert, 84503 Altötting (DE)
(74) Vertreter: Fritz, Helmut
(86) Internationale Anmeldenummer: PCT/EP2005/005201
(87) Internationale Veröffentlichungsnummer: WO 2005/111117

(56) Entgegenhaltungen:
- WO-A-02/42360
- DE-A1- 19 814 267

## Beschreibung

Die Erfindung betrifft die diskontinuierliche Herstellung von wässrigen Emulsionen, die Organosiliciumverbindung, Emulgator und Wasser umfassen.

Silicon-Emulsionen sind als milchig-weiße Makroemulsionen in Form Wasser in Öl (w/o) oder Öl in Wasser (o/w) Emulsionen sowie als opake bis transparente Mikroemulsionen im Handel. Es sind Mischungen aus zumindest einem wasserunlöslichen Silan, Siliconöl, Siliconharz, Siliconelastomer oder Mischungen daraus, mindestens einem Emulgator und Wasser. Zur Herstellung der Emulsion werden diese Komponenten unter Anwendung von z.B. Wärme und Kälte, mechanischer Scherung, die mittels engen Spalten in Rotor-Stator-Systemen, Kolloidmühlen, Mikrokanälen, Membranen, Hochdruckhomogenisatoren, Strahldüsen und ähnlichem, oder mittels Ultraschall erzeugt werden kann, miteinander vermischt und dispergiert. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Die Silicon-Komponente der Emulsion kann in einer vorgeschalteten Reaktion außerhalb der Emulgiereinheit hergestellt werden und dann in der Emulgiereinheit dispergiert werden. Oder die Silicon-Komponente der Emulsion kann in der Emulgiereinheit selbst erzeugt werden (in-situ-Herstellung). Kennzeichnend für die in-situ-Herstellung ist, dass kurz vor, während oder kurz nach der Emulsionsherstellung eine chemische Reaktion abläuft.

Zur in-situ-Herstellung bzw. Polymerisation der Silicon-Komponente können alle in der Siliconchemie üblichen Reaktionen, insbesondere solche die zur Erhöhung des Molekulargewichts führen, verwendet werden, z.B. Kettenverlängerungs- oder Äquilibrierungs-, Polymerisations-, Kondensations-, oder Polyadditionsreaktionen.

Die Emulsionspolymerisation von OH-endständigen Polysiloxanen mit sauren Katalysatoren, z.B. einem sauren Tensid, ist in US 6 140 414, US 5 726 270 oder US 5 629 388 beschrieben. In US 5 504 150 wird als saurer Katalysator ein Phosphazen verwendet. Die basenkatalysierte Emulsionspolymerisation von cyclischen oder OH-endständigen Polysiloxanen ist z.B. in US 6 201 063 beschrieben.

Polyadditions,oder Hydrosilylierungsreaktionen in Emulsion sind z.B. beschrieben in DE 198 56 075, US 6 057 386, EP 1 135 429 oder EP 780 422.

Polymerisationsreaktionen in Emulsion, die zu verzweigten flüssigen Polysiloxanen führen sind z.B. in DE 199 60 291 beschrieben, solche die zu verzweigten elastomeren Polysiloxanen führen z.B. in WO 00/34359.

Bei der Herstellung von Silicon-Emulsionen unter Anwendung von Scherung wird z.B. zuerst das Silicon oder eine Siliconmischung mit mindestens einem Emulgator und einer kleinen Menge Wasser vermischt und einer hohen Scherung, z.B. in einem Rotor-Stator Mischer mit engen Spalten, ausgesetzt. Dabei entsteht als so genannte "steife Phase", eine w/o-Emulsion mit sehr hoher Viskosität. Die Viskosität dieser steifen Phase ist sehr stark scherabhängig. Diese steife Phase wird dann langsam mit Wasser bis zum Inversionspunkt verdünnt. Am Inversionspunkt wird aus der w/o eine o/w Emulsion. Die Ausbildung der steifen Phase, sowie die Art der Verdünnung mit Wasser bis zur gewünschten Endkonzentration der Emulsion bestimmt die Qualität der Emulsion. Unter Qualität der Emulsion sind insbesondere die Teilchengröße, die Verteilung der Teilchengröße, die Lagerstabilität sowie die Toleranz der Emulsion gegenüber Erwärmung und/oder Abkühlung, Erschütterungen, Änderung des pH-Wertes, Änderung des Salzgehaltes usw. zu verstehen.

Die o. g. Herstellung von Siliconemulsionen mittels Scherung kann Batch-weise oder kontinuierlich erfolgen.

Die Batch-weise Herstellung ist z.B. in EP 579 458 A beschrieben.

In WO 02/42360 A und DE 19814267 A1 sind Verfahren zur Herstellung von wässrigen Siliconemulsionen unter Verwendung von scherenden Mischern und Pumpen beschrieben, wobei die Pumpen in Strömungsrichtung vor dem scherenden Mischer angeordnet sind.

Gegenstand der Erfindung ist ein diskontinuierliches Verfahren zur Herstellung von wässrigen Emulsionen (E), die Organosiliciumverbindung (A), Emulgator (B) und Wasser umfassen, bei dem in einem Emulgierbehälter aus der Organosiliciumverbindung (A), dem Emulgator (B) und Wasser durch Scherung und Umpumpen und Zurückführen in den Emulgierbehälter eine Voremulsion (V) hoher Viskosität hergestellt wird und anschliessend die Voremulsion (V) mit weiterem Wasser verdünnt wird,
wobei bei dem Verfahren die Drücke im Bereich von 0,5 bis 10 bar und die Temperaturen im Bereich von 5 bis 120°C geregelt werden,
wobei die Regelung der Drücke über die Drehzahl eines scherenden Mischers und die Umpumpgeschwindigkeit einer in Strömungsrichtung nach dem scherenden Mischer vorhandenen Pumpe und die Regelung der Temperaturen durch die Temperaturen der Rohstoffe, die Drehzahl eines scherenden Mischers und die Umpumpgeschwindigkeit einer Pumpe erfolgt.

Es wurde gefunden, dass für die Qualität der Emulsionen (E) die Regelung der Drücke und Temperaturen in den einzelnen Verfahrensschritten, insbesondere bei der Herstellung der Voremulsion (V), bestimmend ist und durch die Regelung die Qualität der hergestellten Emulsionen (E) deutlich verbessert werden kann. Die Regelung führt bei Mikroemulsionen zu klareren Produkten mit kleinen Teilchengrößen. Bei Makroemulsionen werden deutlich geringere Teilchengrößen und verbesserte Lager- und Verdünnungsstabilitäten erreicht. Mit der Temperatursteuerung ist eine Steuerung der Teilchengrößen möglich. Dieser Effekt wird durch die Druckregelung unterstützt.

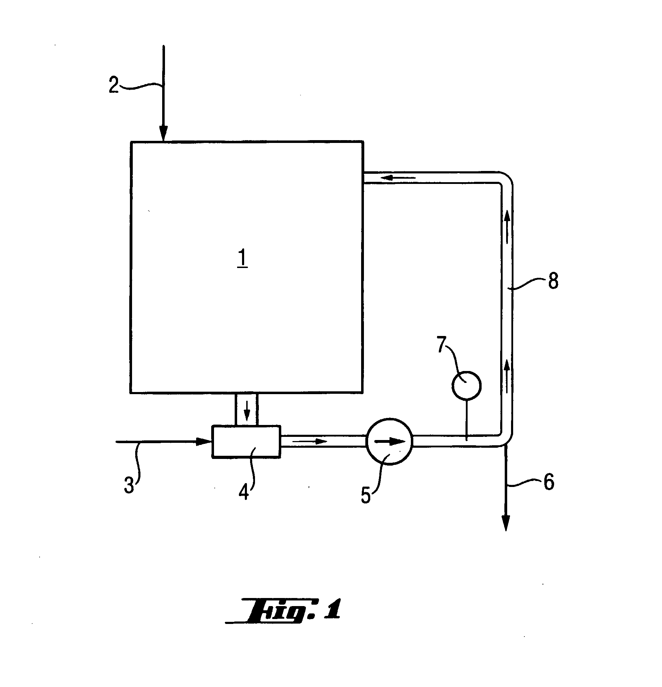

Das Verfahren wird beispielhaft anhand Figur 1 erläutert. Emulgator (B) und ein Teil des Wassers werden in den Kessel (1) gegeben und vermischt. Zum Mischen enthält der Kessel (1) vorzugsweise mindestens einen Rührer. Der scherende Mischer (4), beispielsweise ein Rotor-Stator-Homogenisator und die zwangsfördernde Pumpe (5), die z.B. eine Zahnrad-, Drehkolben- oder Drehspindelpumpe sein kann, werden in Gang gesetzt und das Emulgator-Wassergemisch (EW) umgepumpt und durch Leitung (8) zurück in den Kessel geführt. Durch Leitung (2) oder (3) wird die Organosiliciumverbindung (A) in den Kessel (1) dosiert. Bevorzugt wird die Organosiliciumverbindung (A) durch Leitung (3), langsam direkt in den scherenden Mischer (4) gedrückt, dort mit dem Emulgator-Wassergemisch (EW) vermengt und das Gemisch durch Leitung (8) in den Kessel (1) zurückgeführt. Während dieses Vorgangs wird die Voremulsion hoher Viskosität (V) erzeugt. Unter Scherung und weiterer Wasserzugabe erfolgt im scherenden Mischer (4) die Verdünnung der Voremulsion (V). Die Wasserzugabe erfolgt bevorzugt durch Leitung (3), wobei die Mischung dabei ständig im Kreis durch Leitung (8) gepumpt wird. Durch Leitung (2) oder (3) können Zusatzstoffe (Z) zugegeben werden und die Emulsion (E) kann auf die gewünschte Endkonzentration eingestellt und durch Leitung (6) entnommen werden. Desweiteren besteht die Möglichkeit, die Emulsion (E) bei der Entnahme durch Leitung (6) weiter mit Wasser zu verdünnen, z.B. mittels eines In-Line-Mischers oder in einem nachgeschalteten Mischtank, bevor das fertige Produkt in ein Transport- oder Verkaufsgebinde gefüllt wird.

Besonders vorteilhaft ist, eine zusätzliche Pumpe (5) einzusetzen, die in Strömungsrichtung nach dem scherenden Mischer (4) eingebaut ist, um die Umpumpgeschwindigkeit des Gemisches sowie den Druck vor und nach der Pumpe (5) zu kontrollieren und in den gewünschten Bereich zu regeln. Da die Voremulsion (V) bei niedriger Umpumpgeschwindigkeit im scherenden Mischer (4) länger der Scherung ausgesetzt ist und somit länger Energie eingetragen wird, erhöht sich bei niedriger Umpumpgeschwindigkeit die Temperatur der Voremulsion (V). Durch das Zusammenspiel von Umpumpgeschwindigkeit, Druckregulierung und Temperatur kann die Tröpfchengröße der Voremulsion (V) und Emulsion (E) sowie die Tropfengrößenverteilung effektiv gesteuert werden. Dies ist sehr vorteilhaft für die Qualität der Emulsion, da Feinteiligkeit und eine enge Verteilung der Tropfengrößen zu einer erhöhten Stabilität der Emulsion (E) führen.

Die Einstellung des Drucks im Bereich von 0,5 bis 10 bar und der Temperatur von 5 bis 120 °C kann z.B. über die Umwälzmenge der Pumpe (5) erfolgen, und an der Mess-Stelle (7) erfasst werden.

Für die Drücke und Temperaturen vor/nach der Pumpe (5) ergeben sich je nach Voremulsion (V) und dessen Viskosität unterschiedliche Werte. Typischerweise ist der Druck und die Temperatur dann umso höher, je viskoser die Voremulsion (V) ist.

Während des gesamten Verfahrens liegt der Gesamtsystemdruck in der Apparatur bevorzugt bei 0 bis 6 bar absolut, bevorzugt bei 0,05 bis 2 bar absolut und insbesondere bei 0,1 und 1,5 bar.

In einer bevorzugten Ausführungsform wird
in einem ersten Schritt der Emulgator (B) mit Wasser zu einem Emulgator-Wassergemisch (EW) vermischt,
in einem zweiten Schritt die Organosiliciumverbindung (A) zum Emulgator-Wassergemisch (EW) gegeben und durch Scherung die Voremulsion (V) hoher Viskosität hergestellt. Anschliessend wird in einem dritten Schritt die Voremulsion (V) mit Wasser verdünnt.

Vorzugsweise wird bei der Herstellung der Voremulsion (V), insbesondere im vorstehenden Schritt 1 höchstens 50 %, besonders bevorzugt höchstens 25 %, insbesondere höchstens 10 %, des gesamten in die Emulsion (E) eingebrachten Wassers eingesetzt. Vorzugsweise beträgt die Viskosität der Voremulsion (V) bei 25°C 40.000 bis 5.000.000 mPa·s, insbesondere 50.000 bis 1.000.000 mPa·s.

Im zweiten Schritt werden als Organosiliciumverbindung (A) optional ein oder mehrere Organosiliciumverbindungen oder Gemische davon zugegeben und Energie, insbesondere durch Scherung, zum Tropfenaufbruch eingetragen. Die Scherung im zweiten Schritt erfolgt durch einen scherenden Mischer, beispielsweise durch einen Rotor-Stator-Homogenisator. Wenn gewünscht, können die zugegebenen Organosiliciumverbindungen (A) mit sich selbst oder mit weiteren Stoffen zur Reaktion gebracht werden. Dazu können alle in der Siliconchemie üblichen Reaktionen, insbesondere solche die zur Erhöhung des Molekulargewichts führen, verwendet werden, z.B. Kettenverlängerungs- oder Äquilibrierungs-, Polymerisations-, Kondensations-, oder Polyadditionsreaktionen. Durch diesen Verfahrensschritt der in-situ-Herstellung sind insbesondere Emulsionen von hochmolekulare flüssigen, elastomeren, gelartigen oder festen Organosiliciumverbindungen (A), erhältlich.

Die Zugabe der Inhaltsstoffe der Emulsion in den Emulgierbehälter erfolgt bevorzugt direkt in den Bereich, in dem mittels des scherenden Mischers eine hohe Scherung erzeugt wird.

Im dritten Schritt wird zur hochviskosen Voremulsion (V) vorzugsweise unter Scherung zunächst sehr langsam Wasser zugegeben, z.B. mit einer Zugabegeschwindigkeit von 0,004 %/sec bis 0,1 %/sec insbesondere 0,008 %/sec bis 0,05 %/sec bezogen auf die Gesamtmenge der fertigen Emulsion, danach z.B. mit 0,015 %/sec.. Wenn das Wasser von der Emulsion besser aufgenommen wird, kann die Zugabegeschwindigkeit weiter erhöht werden.

Im dritten Schritt oder danach können noch Zusatzstoffe (Z) wie Emulgatoren, Verdicker, Biozide und wasserlösliche oder dispergierbare Silicone, Polysiloxane oder Silane sowie Säure oder Laugen zur pH-Einstellung eingemischt werden, und der Festgehalt wird auf den gewünschten Wert eingestellt.

Wasser und ein Emulgator (B) werden in einen Emulgierbehälter vorgelegt, beispielsweise in einem Mischkessel. Die Durchmischung erfolgt bevorzugt mittels üblicher Mischwerkzeuge, insbesondere wandgängiger Rührer oder indem der Inhalt des Emulgierbehälters umgepumpt wird.

Die Emulsionen (E) haben bevorzugt einen Gehalt an Organosiliciumverbindung (A) von mindestens 1 bis 99 Gew.-%, besonders bevorzugt 1 bis 75 Gew.-%, insbesondere 9 bis 80 Gew.-%. Die mittels Lichtstreuung gemessene mittlere Teilchengröße liegt im Bereich 0,001 bis 100 *µ*m, bevorzugt bei 0,002 bis 1 *µ*m. Die pH-Werte können von 1 bis 14 variieren, bevorzugt 2 bis 10, besonders bevorzugt 3 bis 9.

In dem Verfahren können alle Silicone, Siloxane, Polysiloxane oder Silane als Organosiliciumverbindung (A) eingesetzt werden sowie deren Mischungen, Lösungen oder Dispersionen. Beispiele für (A) sind lineare Organopolysiloxane und Siliconharze. Unter Siliconharzen versteht man Produkte die nicht nur mono- und difunktionelle Siliciumeinheiten enthalten sondern auch tri- und tetrafunktionelle Siliciumeinheiten aufweisen.

Organosiliciumverbindung (A) ist vorzugsweise bei 25°C flüssig und weist vorzugsweise Viskositäten von 0,5 bis 100 000 000 mPa·s, vorzugsweise 0,5 bis 500 000 mPa·s, insbesondere 2 bis 80 000 mPa·s auf.

Eine Organosiliciumverbindung (A) kann im Verfahren zu einer anderen Organosiliciumverbindungen (A) umgesetzt werden (in-situ-Herstellung). Die so hergestellte Organosiliciumverbindung (A) kann bei 25°C eine Flüssigkeit, ein Elastomer oder ein Feststoff sein.

Beispiele für Organosiliciumverbindungen sind Organosiliciumverbindungen, die Einheiten der allgemeinen Formel I

AₐR_{b}SiX_{c}O_{[4-(a+b+C)]/2} (I),

enthalten, wobei
- **R**: ein Wasserstoffatom oder einen einwertigen, zweiwertigen oder dreiwertigen Kohlenwasserstoffrest mit 1 bis 200 Kohlenstoffatomen, der mit Halogen-, Amin-, Amid-, Ammonium-, Mercapto-, Acrylat-, Urethan-, Harnstoff-, Carboxy-, oder Maleinimidgruppen substituiert sein kann,
- **X**: ein Chloratom, einen Rest der Formel -O-, wobei als Ausgleich der Ladungen Protonen und/oder organische bzw. anorganische ionische Substanzen vorhanden sein können, einen Rest der allgemeinen Formel -OR¹ oder einen Rest der allgemeinen Formel II

- (R²)ₕ-[OCH₂CH₂]ₑ[OC₃H₆]_{f}[OC₄H₈)₄]_{g}OR³ (II),
wobei
- **R¹**: ein Wasserstoffatom oder einen Kohlenwasserstoffrest mit 1 bis 200 Kohlenstoffatomen, der durch ein oder mehrere gleiche oder verschiedene Heteroatome, die ausgewählt werden aus O, S, N und P, unterbrochen sein kann,
- **R²**: einen zweiwertigen Kohlenwasserstoffrest mit 1 bis 200 Kohlenstoffatomen, der durch ein oder mehrere Gruppen der Formeln -C(O)-, -C(O)O-, -C(O)NR¹, -NR¹-, -N⁺HR¹-, -O-, -S-unterbrochen und/oder mit F, Cl oder Br substituiert sein kann,
- **R³**: eine Bedeutung von **R¹** haben kann, oder einen Rest der Formeln -C(O)R¹ oder -Si(R¹)₃,
- **A**: einen Rest der allgemeinen Formel IV

- R⁴(B)_{z} (IV),
wobei
- **R⁴**: einen zwei- drei- oder vierwertigen Kohlenwasserstoffrest mit 1 bis 200 Kohlenstoffatomen je Rest, der durch ein oder mehrere Gruppen der Formeln -C(O)-, -C(O)O-,-C(O)NR⁵, -NR⁵-, -N⁺HR⁵-, -N⁺R⁵R⁵-, -O-, -S-, -(HO)P(O)- oder -(NaO)P(O)- unterbrochen und/oder mit F, Cl oder Br substituiert sein kann, wobei
- **R⁵**: ein Wasserstoffatom oder einen Kohlenwasserstoffrest mit 1 bis 200 Kohlenstoffatomen je Rest, der durch ein oder mehrere Gruppen der Formeln -C(O)-, -C(O)O-, -C(O)NR⁵-,-NR⁵-, -N⁺HR⁵-, -N⁺R⁵R⁵-, -O- oder -S- unterbrochen und/ oder mit F, Cl oder Br substituiert sein kann,
- **B**: eine Bedeutung von **R⁵** haben kann oder einen Rest, der ausgewählt wird aus -COO⁻, -SO₃-, -OPO₃H_{y^{(2-y)}}-, -N⁺R⁵R⁵R⁵,-P⁺R⁵R⁵R⁵, -NR⁵R⁵, -OH, -SH, F, Cl, Br, -C(O)H, -COOH, -SO₃H, -C₆H₄-OH und -CₘF₂ₘ₊₁, 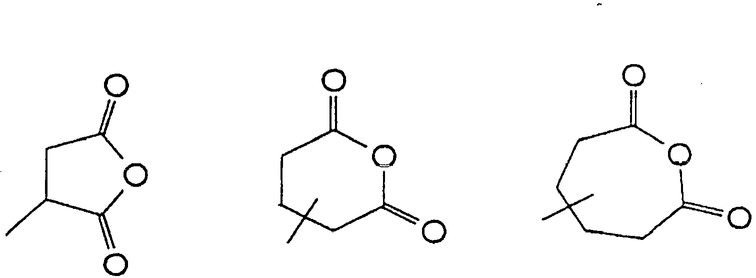 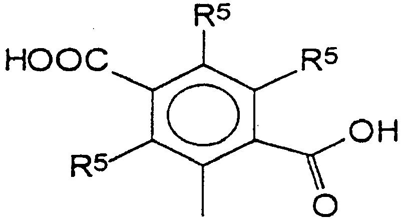 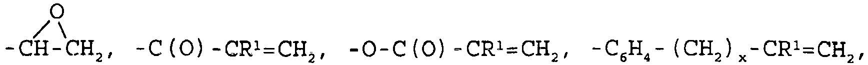 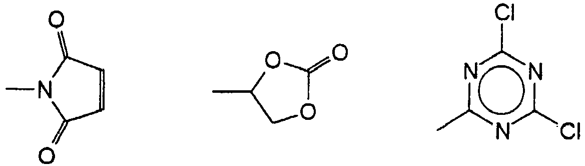
**x** eine ganze Zahl von 1-20,
**y** die Werte 0 oder 1,
**z** je nach Wertigkeit von **R⁴** die Werte 1, 2 oder 3,
**h** die Werte 0 oder 1,
**m** eine ganze Zahl von 1-20,
**a, b und c** jeweils die Werte 0, 1, 2, 3, oder 4 und die Summe **a + b + c** kleiner oder gleich 4 und
**e, f und g** jeweils eine ganze Zahl von 0-200 bedeuten, mit der Maßgabe, daß die Summe **e + f + g > 1** ist.

Im Falle der Silane ergibt a+b+c in der allgemeinen Formel I einen Wert von 4, und im Falle der Siloxane weisen die Einheiten der allgemeinen Formel I einen durchschnittlichen Wert (a+b+c) von 0 bis 3,99 auf.

Bevorzugt sind Polyorganosiloxane, die aus 10 bis 50000, bevorzugt aus 20 bis 20000, besonders bevorzugt aus 50 bis 10000 Einheiten der allgemeinen Formel I bestehen.

Als Ausgleich der Ladungen in den Resten **A, R** und **X** können gegebenenfalls Protonen und/oder organische bzw. anorganische ionische Substanzen vorhanden sein, wie z.B. Alkalimetall-, Erdalkalimetall-, Ammonium-Ionen, Halogenid-, Sulfat-, Phosphat-, Carboxylat-, Sulfonat-, Phosphonat-Ionen. Weiterhin können die Organosiliciumverbindungen gegebenenfalls Einheiten der allgemeinen Formeln (V) und (VI) enthalten,

O_{(4-i-k-1)/2}RᵢXₖSi-A¹-SiXₖRᵢO_{(4-i-k-1)/2} (V),

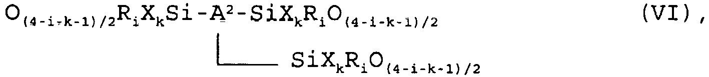

wobei
- **A²**: einen dreiwertigen Kohlenwasserstoffrest mit 1 bis 200 Kohlenstoffatomen bedeutet, der durch Reste der Formeln-C(O)-, -C(O)O-, -C(O)NR⁵, -NR⁵-, -N⁺HR⁵-, -N⁺R⁵R⁵-, -O-, -S-, -N- oder -N⁺R⁵- unterbrochen und/oder mit F, Cl oder Br substituiert sein kann,
- **A¹**: einen zweiwertigen Rest **R²** darstellt,
- **i** und **k**: jeweils die Werte 0, 1, 2 oder 3 bedeuten, mit der Maßgabe **i + k** ≤ 3 und
- **R** und **X**: die oben angegebenen Bedeutungen haben.

Die vorstehend aufgeführten Kohlenwasserstoffreste **R, R¹, R², R³, R⁴, R⁵, A¹** und **A²** können gesättigt, ungesättigt, linear, cyclisch, aromatisch oder nichtaromatisch sein.

Beispiele für Kohlenwasserstoffreste **R** sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.
Bevorzugt sind das Wasserstoffatom oder der Methyl-, Ethyl-, Octyl- und Phenylrest, besonders bevorzugt sind das Wasserstoffatom oder der Methyl-und Ethylrest.

Beispiele für halogenierte Reste **R** sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Rest **R¹** sind die für Rest R gleich Alkylreste angegebenen Beispiele sowie der Methoxyethyl- und der Ethoxyethylrest, wobei es sich bei Rest **R¹** bevorzugt um Alkylreste mit 1 bis 50 Kohlenstoffatomen, die durch Sauerstoffatome unterbrochen sein können, besonders bevorzugt um den Methyl- und den Ethylrest handelt.

Beispiele für organische oder anorganische Substanzen zum Ausgleich der Ladungen für X = -O- sind,
Alkali- und Erdalkaliionen, Ammonium- und Phosphoniumionen sowie ein- zwei- oder dreiwertige Metallionen, bevorzugt sind Alkaliionen, besonders bevorzugt Na⁺ und K⁺.

Beispiele für Reste **X** sind der Methoxy- bzw. der Ethoxyrest und der allgemeinen Formel (II), wie
-(CH₂)₃-(OCH₂CH₂)₃-OCH₃, -(CH₂)₃-(OCH₂CH₂)₆-OCH₃,
-(CH₂)₃-(OCH₂CH₂)₃₅-OCH₃,
-(CH₂)₃-(OCH(CH₃)CH₂)₃-OCH₃, -(CH₂)₃-(OCH(CH₃)CH₂)₆-OCH₃,
-(CH₂)₃-(OCH(CH₃)CH₂)₃₅-OCH₃, -(CH₂)₃-(OCH₂CH₂)₃-(OCH(CH₃)CH₂)₃-OCH₃,
-(CH₂)₃-(OCH₂CH₂)₆-(OCH(CH₃)CH₂)₆-OCH₃,
-(CH₂)₃-(OCH₂CH₂)₃₅-(OCH(CH₃)CH₂)₃₅-OCH₃,
-(CH₂)₃-(OCH₂CH₂)₃-OSi(eH₃)₃, -(CH₂)₃-(OCH₂CH₂)₆-OSi(CH₃)₃,
-(CH₂)₃-(OCH₂CH₂)₃₅-OSi(CH₃)₃,
-(CH₂)₃-(OCH₂CH₂)₃-OC(O)CH₃, -(CH₂)₃-(OCH₂CH₂)₆-OC(O)CH₃,
-(CH₂)₃-(OCH₂CH₂)₃₅-OC(O)CH₃,
-(OCH₂CH₂)₃-OH, -(OCH₂CH₂)₆-OH, -(OCH₂CH₂)₃₅-OH,
-(OCH(CH₃)CH₂)₃-OH, -(OCH(CH₃)CH₂)₆-OH,
-(OCH(CH₃)CH₂)₃₅-OH, -(OCH₂CH₂)₃-(OCH(CH₃)CH₂)₃-OH,
-(OCH₂CH₂)₆-(OCH(CH₃)CH₂)₆-OH,
-(OCH₂CH₂)₃₅-(OCH(CH₃)CH₂)₃₅-OH;
-(OCH₂CH₂)₁₈-(O(CH₂)₄)₁₈-OH
-(OCH₂CH₂)₃-OCH₃, -(OCH₂CH₂)₆-OCH₃, -(OCH₂CH₂)₃₅-OCH₃,
-(OCH(CH₃)CH₂)₃-OCH₃, -(OCH(CH₃)CH₂)₆-OCH₃,
-(OCH(CH₃)CH₂)₃₅-OCH₃, -(OCH₂CH₂)₃-(OCH(CH₃)CH₂)₃-OCH₃,
-(OCH₂CH₂)₆-(OCH(CH₃)CH₂)₆-OCH₃,
-(OCH₂CH₂)₃₅-(OCH(CH₃)CH₂)₃₅-OCH₃,
-(OCH₂CH₂)₃-OSi(CH₃)₃, -(OCH₂CH₂)₆-OSi(CH₃)₃,
-(OCH₂CH₂)₃₅-OSi(CH₃)₃,
-(OCH₂CH₂)₃-OC(O)CH₃, -(OCH₂CH₂)₆-OC(O)CH₃,
-(OCH₂CH₂)₃₅-OC(O)CH₃,
-(OCH₂CH₂)₃-OH, -(OCH₂CH₂)₆-OH, -(OCH₂CH₂)₃₅-OH,
-(OCH(CH₃)CH₂)₃-OH, -(OCH(CH₃)CH₂)₆-OH,
-(OCH(CH₃)CH₂)₃₅-OH, -(OCH₂CH₂)₃-(OCH(CH₃)CH₂)₃-OH,
-(OCH₂CH₂)₆-(OCH(CH₃)CH₂)₆-OH,
-(OCH₂CH₂)₃₅-(OCH(CH₃)CH₂)₃₅-OH und
-(OCH₂CH₂)₁₈-(O(CH₂)₄)₁₈-OH.

Beispiele für Reste **R²** sind lineare oder verzweigte, substituierte oder unsubstituierte Kohlenwasserstoffreste mit vorzugsweise 2 bis 10 Kohlenstoffatomen, wobei gesättigte oder ungesättigte Alkylenreste bevorzugt sind und der Ethylen- oder der Propylenrest besonders bevorzugt sind.

Beispiele für Reste **R³** sind die für R gleich Alkylrest oder Arylrest angegebenen Beispiele und Reste der Formel-C(O)R¹oder -Si(R¹)₃, wobei der Methyl-, Ethyl-, Propyl- und Butyl- sowie Trialkylsilyl- und -C(0)-Alkylrest bevorzugt und der Methyl, Butyl -, -C(O)-CH₃ und der Trimethylsilylrest besonders bevorzugt sind.

Beispiele für **R⁴** sind Reste der Formeln

-(CH₂)₃-

-(CH₂)₃-O-CH₂-

-(CH₂)₃-O-(CH₂-CH₂O)ₙ-

-(CH₂)₃-O-CH₂-CH(OH)-CH₂-

-(CH₂)₃-NH-(CH₂)₂-

-(CH₂)₃-NH-C(O)-

-(CH₂)₃-NH-(CH₂)₂-C(O)-O-

-(CH₂)₃-NH-(CH₂)₂-C(O)-O-(CH₂)₂-

-(CH₂)₃-NH-(CH₂)₂-NH-C(O)-CH=CH-

-(CH₂)₃-NH-C(O)-CH=CH-

-(CH₂)₃-C₆H₄-

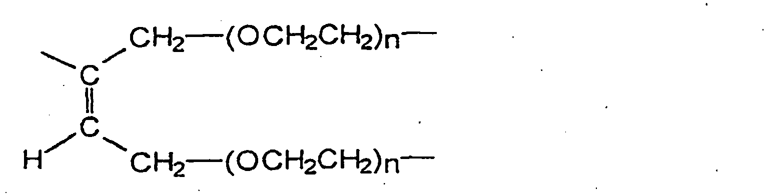

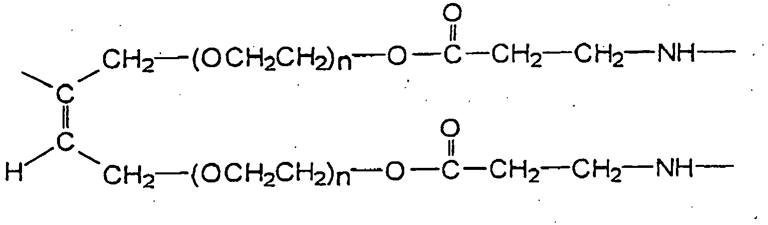

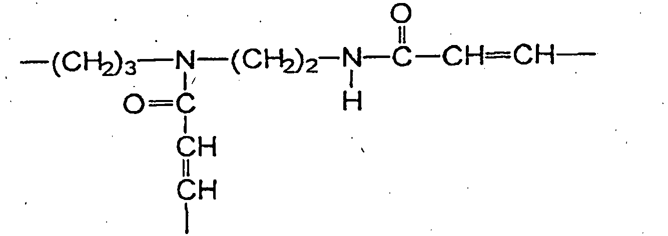

Bevorzugt für **R⁴** sind Reste der Formeln

-(CH₂)₃-

-CH₂)₃-NH-(CH₂)₂-

-(CH₂)₃-O-CH₂-CH(OH)-CH₂-

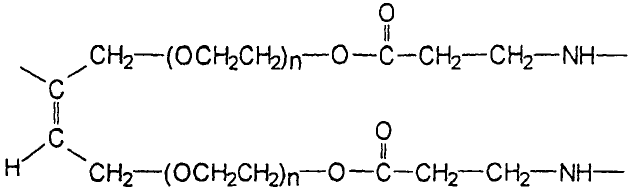

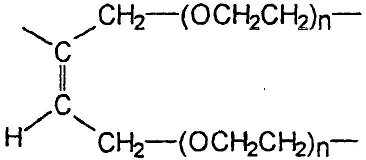

Besonders bevorzugt als **R⁴** sind - (CH₂)₃- und -(CH₂)₃-NH-(CH₂)₂-.

Beispiele für **R⁵** sind die vorstehend bei **R** aufgeführten Alkyl- und Arylreste und Reste der Formeln

-C(O)-CH₃

-(CH₂CH₂O)₃-CH₃, -(CH₂CH₂O)₆-CH₃, -(CH₂CH₂O)₃₅-CH₃,

-(CH(CH₃)CH₂O)₃-CH₃, -(CH(CH₃)CH₂O)₆-CH₃,

-(CH(CH₃)CH₂O)₃₅-CH₃, -(CH₂CH₂O)₃-(CH(CH₃)CH₂O)₃-CH₃,

-(CH₂CH₂O)₅-(CH₂-CH(CH₃)O)₅-CH₃,

-(CH₂CH₂O)₁₀-(CH₂-CH(CH₃)O)₁₀-CH₃,

-(CH₂CH₂O)₃-Si(CH₃)₃, -(CH₂CH₂O)₆-Si(CH₃)₃, -(CH₂CH₂O)₃₅-Si(CH₃)₃,

-(CH₂CH₂O)₅-(CH₂-CH(CH₃)O)₅-Si(CH₃)₃,

-(CH₂CH₂O)₁₀-(CH₂-CH(CH₃)O)₁₀-Si(CH₃)₃,

-(CH₂CH₂O)₃-C(O)CH₃, -(CH₂CH₂O)₆-C(O)CH₃, -(CH₂CH₂O)₃₅-C(O)CH₃,

-(CH₂CH₂O)₅-(CH₂-CH(CH₃)O)₅-C(O)CH₃,

-(CH₂CH₂O)₁₀-(CH₂-CH(CH₃)O)₁₀-C(O)CH₃,

-(CH₂CH₂O)₃-H, -(CH₂CH₂O)₆-H, -(CH₂CH₂O)₃₅-H,

-(CH(CH₃)CH₂O)₃-H, -(CH(CH₃)CH₂O)₆-H,

-(CH(CH₃)CH₂O)₃₅-H, -(CH₂CH₂O)₃-(CH(CH₃)CH₂O)₃-H,

-(CH₂CH₂O)₅-(CH₂-CH(CH₃)O)₅-H,

- (CH₂CH₂O)₁₀-(CH₂-CH(CH₃)O)₁₀-H und

- (CH₂CH₂O)₁₈-((CH₂)₄O)₁₈-H.

Bevorzugt sind das Wasserstoffatom und die für **R** angegebenen Beispiele, besonders bevorzugt sind das Wasserstoffatom und Alkylreste.

Beispiele für Reste B sind -COONa, -SO₃Na, -COOH, -SH und insbesondere -OH, -NH₂, -NH-CH₃, -NH-(C₆H₁₁) und -N-(CH₂-CH=CH₂)₂, wobei -NH₂, -NH-CH₃ und -NH- (C₆H₁₁) besonders bevorzugt sind.

Beispiele für **A¹** sind lineare oder verzweigte, zweiwertige Alkylreste mit vorzugsweise 2 bis 20 Kohlenstoffatomen, oder Reste der Formeln

-(CH₂)₃-NH-(CH₂)₃-, -(CH₂)₃-NR⁵-(CH₂)₃-

-(CH₂)₃-(CH₂-CH₂O)_{f}-(CH₂)₃-

-O-(CH₂-CH₂O)_{f}-

### Beispiel für A² ist N[(CH₂)₃-]₃.

Organosiliciumverbindungen (A) können auch während des Verfahrens aus Rohprodukten gebildet werden.

Bevorzugte Beispiele für Organosiliciumverbindungen (A) sind lineare Trimethylsilyl- oder Hydroxy-Dimethylsilyl-endständige Polydimethylsiloxane, wie z.B
Öle der Viskosität 50 mPas mit
96,5 Mol% (CH₃)₂SiO_{2/2} und 3,5 Mol% (CH₃)₃SiO_{1/2} oder
96,5 Mol% (CH₃)₂SiO_{2/2} und 3,5 Mol% (CH₃)₂(OH)SiO_{1/2};
Öle der Viskosität 100 mPas mit
98 Mol% (CH₃)₂SiO_{2/2} und 2 Mol% (CH₃)₃SiO_{1/2} oder
98 Mol% (CH₃)₂SiO_{2/2} und 2 Mol% (CH₃)₂(OH)SiO_{1/2};
Öle der Viskosität 1000 mPas mit
99,2 Mol% (CH₃)₂SiO_{2/2} und 0,8 Mol% (CH₃)₃SiO_{1/2} oder
99,2 Mol% (CH₃)₂SiO_{2/2} und 0,8 Mol% (CH₃)₂(OH)SiO_{1/2};
Öle der Viskosität 12500 mPas mit
99,63 Mol% (CH₃)₂SiO_{2/2} und 0,37 Mol% (CH₃)₃SiO_{1/2} oder
99,63 Mol% (CH₃)₂SiO_{2/2} und 0,37 Mol% (CH₃)₂(OH)SiO_{1/2};
Öle der Viskosität 100000 mPas mit
99,81 Mol% (CH₃)₂SiO_{2/2} und 0,19 Mol% (CH₃)₃SiO_{1/2} oder
99,81 Mol% (CH₃)₂SiO_{2/2} und 0,19 Mol% (CH₃)₂(OH)SiO_{1/2}.

Weiterhin bevorzugte lineare Organosiliciumverbindungen (A) sind lineare Trimethylsilyl- oder Hydroxy-Dimethylsilyl-endständige Polydimethylsiloxane, die als zusätzliche end- oder kettenständigen chemische Baugruppen solche mit Alkyl-, Alkenyl-, Aryl-, Amin-, Amid-, Ammonium-, Urethan-, Harnstoff-, Carboxy-, Glykol-, Ether-, Ester-, Mercapto-, Fluor-, oder SiH-Funktionen enthalten können.

Bevorzugte Beispiele für harzartige Organosiliciumverbindungen (A) sind Methyl-Ethoxy-Harze, z.B. der Formel

CH₃Si(OC₂H₅)_{0,8}(O)_{1,1};

Methylharze, z.B. mit 80 Mol% CH₃SiO_{3/2} und 20 Mol% (CH₃)₂SiO_{2/2} und einer Molmasse von ca. 5000g/Mol oder 98 Mol% CH₃SiO_{3/2} und 2 Mol% (CH₃)₂SiO_{2/2} und einer Molmasse von ca. 5000g/Mol.

Falls die Organosiliciumverbindung (A) selbst als Emulgator wirkt, dann können Organosiliciumverbindung (A) und Emulgator (B) identisch sein. Dann kann auf den Zusatz von separatem Emulgator (B) verzichtet werden.

Bei dem Bestandteil (B) der Emulsionen handelt es sich bevorzugt um kommerziell erwerbbare und gut untersuchte Emulgatoren, wie z.B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Prozent Ethylenoxidgehalt; ionische Emulgatoren, wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; Phosphatester; Organosiliciumverbindungen (A), die Einheiten der allgemeinen Formel I aufweisen, bei denen X einen Rest der allgemeinen Formel II bedeutet und c mindestens 1 ist.

Wie auf dem Gebiet der Emulgatoren wohl bekannt, können die Gegenionen im Falle von anionischen Emulgatoren Alkalimetalle, Ammoniak oder substituierte Amine, wie Trimethylamin oder Triethanolamin, sein. Normalerweise sind Ammonium-, Natrium- und Kaliumionen bevorzugt. Im Falle von kationische Emulgatoren ist das Gegenion ein Halogenid, Sulfat oder Methylsulfat. Chloride sind die zumeist industriell verfügbaren Verbindungen.

Die obengenannten Fettstrukturen stellen üblicherweise die lipophile Hälfte der Emulgatoren dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Alkylgruppen können dabei cyclisch, linear oder verzweigt sein.
Andere mögliche Emulgatoren sind Sorbitolmonolaurat-Ethylenoxidkondensate; Sorbitolmonomyristat-Ethylenoxidkondensate; Sorbitolmonostearat-Ethylenoxidkondensate; Dodecylphenol-Ethylenoxidkondensate; Myristylphenol-Ethylenoxidkondensate; Octylphenyl-Ethylenoxidkondensate; Stearylphenol-Ethylenoxidkondensate; Laurylakohol-Ethylenoxidkondensate; Stearylalkohol-Ethylenoxidkondensate; Decylaminobetain; Cocoamidsulfobetain; Olylamidobetain; Cocoimidazolin; Cocosulfoimidazolin; Cetylimidazolin; 1-Hydroxyethyl-2-heptadecenyl-imidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natrium- oder Kaliummyristat.

Ebenso können bekanntermaßen anorganische Feststoffe als Emulgatoren (B) eingesetzt werden. Dies sind z.B. Kieselsäuren oder Bentonite wie in EP 1017745 A oder DE 19742759 A beschrieben.

Bevorzugt sind die nicht ionischen Emulgatoren.
Der Bestandteil (B) kann aus einem o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.

Emulgatoren (B) werden in Mengen von vorzugsweise 0,1 bis 60 Gew.-%, besonders bevorzugt 1 bis 30 Gew.-%, jeweils bezogen auf das Gesamtgewicht an Organosiliciumverbindungen (A) eingesetzt.

Beispiele für Silane sind Vinyltris(methoxyethoxy)silan, Tetraethoxysilan, anhydrolysiertes Tetraethoxysilan, Methyltriethoxysilan, anhydrolysiertes Methyltriethoxysilan, Aminoethylaminopropyltrimethoxysilan,
Aminoethylaminopropyl(methyl)dimethoxysilan.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1a (erfindungsgemäß): Herstellung einer klaren Emulsion eines aminofunktionellen Polysiloxans.

Im Kessel werden 1,60% Isotridecylalkoholethoxylat mit durchschnittlich 8 EO (Arlypon^{®} IT 8), 4,14% Isotridecylalkoholethoxylat mit durchschnittlich 5 EO (Lutensol^{®} TO 5), 0,2% Essigsäure (80%ig) und 3,93% VE-Wasser (vollentsalztes Wasser, Temperatur 12°C, die Temperatur wird auf +/- 2 K geregelt) vorgelegt. Der Mischkessel wird auf 40°C temperiert und der Homogenisator auf 2000 UPM und die Rührer sowie die Kreislaufpumpe eingeschaltet. Anschließend werden mit einer Rate von 1%/min bezogen auf die Endmenge an Emulsion 16,25% aminofunktionelles Siliconöl (Wacker^{®} Finish WR 1300) mit einer Temperatur von 20°C durch Leitung (3) zugeführt. Dabei entsteht eine dicke Phase. Der Druck in der Umpumpleitung beträgt etwa 4 bar und die Temperatur 45°C
Anschließend werden 70,5% VE-Wasser (12°C), beginnend mit 0,02 %/sec bezogen auf die Endmenge an Emulsion, zudosiert. Zum Schluß werden Konservierungsmittel 0,08% (Kathon^{®} LXE) und 3,5% Glycerin dosiert.
Dies führt zu einer klaren Siliconemulsion mit einer Teilchengröße von 20 nm und einer Trübung von 10 ppm.
Die Emulsion bleibt bei einer Lagertemperatur von 50°C über mehrere Monate stabil.

### Vergleichsbeispiel 1 b:

Wählt man die analogen Prozessbedingungen wie unter Beispiel 1 angegeben, führt aber den Prozess durch, sondern dosiert das aminofunktionelle Siliconöl bei Raumtemperatur (20°C) und temperiert den Mischer nicht, so führt dies zu einem deutlichen Temperaturabfall auf ca. 30°C, der Druck bleibt weitgehend unverändert, da sich keine so hochviskose steife Phase wie im Beispiel 1 ausbildete.
Das hergestellte Produkt zeigt eine deutlich größere Teilchengröße von 42 nm und eine Trübung von 23 ppm. In der Lagerung bei 50°C zeigt sich nach 3 Wochen eine Phasenseparation.

### Beispiel 2a(erfindungsgemäß): Herstellung einer mit Polyvinylalkohol stabilisierten Siliconharzemulsion

In den Behälter werden 35,3% Polyvinylalkohollösung (10%ig) (25°C, die Temperatur wird auf +/- 2 K konstant gehalten) vorgelegt. Die Rührer und die Kreislaufpumpe werden eingeschaltet und der Homogenisator auf 2000 UPM eingestellt. Die Behältertemperatur wird auf 15°C geregelt. Anschließend werden 48,4 % einer Mischung aus Siliconharz (80 Mol% T-Einheiten 20 Mol% D-Einheiten, 20°C) und einem OH terminierten Polydimethylsiloxan der Viskosität 30 mPa·s mit einer Zugabegeschwindigkeit von 1%/min bezogen auf die Endmenge an Emulsion über Leitung (3) zudosiert. Der Druck in der Kreislaufleitung beträgt 2 bar und die Temperatur maximal 37°C. Anschließend werden 16,06% VE-Wasser (12°C), beginnend mit 0,02 %/sec bezogen auf die Endmenge an Emulsion, und 0,24% Konservierer (Rocima^{®} 523) zugesetzt und die Mischung 5 Minuten homogenisiert. Mit den vorgegebenen Prozessparametern wird eine Emulsion erzeugt, die bei Raumtemperatur eine Lagerstabilität von 1 Jahr ohne Phasentrennung besitzt.

### Vergleichsbeispiel 2b

Werden die Prozessparameter aus Beispiel 2 ansonsten nicht verändert nur die Temperatur der Polyvinylalkohollösung nicht kontrolliert und auf 50 °C erhöht, sowie der Behälter nicht gekühlt, erhöht sich die Temperatur in der Kreislaufleitung auf etwa 45 °C. Das erhaltene Produkt zeigt schon nach 2 Wochen Lagerung bei Raumtemperatur eine deutliche Abscheidung von Siliconharz.

### Beispiel 3a: (erfindungsgemäß): Hydrosilylierung in Emulsion

In den Behälter werden 1,7 % Wasser (12°C) und 3,2 % eines Isotridecylalkoholethoxylats der durchschnittlichen Formel C₁₃H₂₇O(C₂H₄O)₁₀H eingelegt. Die Rührer und die Kreislaufpumpe werden eingeschaltet und der Homogenisator auf 2000 UPM eingestellt. Die Behältertemperatur wird auf 15°C geregelt. Über Leitung (3) werden 45 % einer Mischung aus Trivinylcyclohexan und HMe₂Si-(OSiMe₂)ₓ-H, wobei das Mol-Verhältnis von C=C zu SiH gleich 1,75 ist, mit einer Temperatur von 13 °C innerhalb 30 Minuten zudosiert. Die Komponenten werden vermischt, bis eine sehr hochviskose Phase entsteht. Die Umwälzgeschwindigkeit bei der hochviskose Phase wird mittels Pumpe (5) auf hoch eingestellt, die Temperatur an der Messstelle (7) beträgt 29 °C, der Druck in der Kreislaufleitung 2,7 bar.

Anschließend werden als Reaktionskatalysator für die Hydrosilylierungsreaktion 10 ppm Platin in Form einer Karstedt-Katalysatorlösung mit 1,1 Gew.-% Pt-Gehalt (Platin-1,3-Divinyl-1,1,3,3-tetramethyldisiloxankomplex gemäß US 3,775,452) eingearbeitet und die hochviskose Phase dann sofort mit 50,1 % destilliertem Wasser, das durch Leitung (3), beginnend mit einer Zugabegeschwindigkeit von 0,01 %/sec bezogen auf die Endmenge an Emulsion, zugeführt wird, zu einer milchig weißen, glatten Emulsion verdünnt. Die entstehende homogene Emulsion hat eine mittlere Teilchengröße von 202 nm und ist mehr als 9 Monate lagerstabil.

Das aus der Emulsion durch Zugabe von Aceton isolierte Silicon-Polymer hat eine Viskosität von 14.550 mPas bei 25 °C

### Vergleichsversuch 3b:

Durchführung des Versuchs wie unter Beispiel 3a beschrieben, jedoch werden die Rohstoffe für die Emulsion mit 25°C zudosiert. Die Emulgierung wird ohne Pumpe (5) durchgeführt. Die Temperatur an der Mess-Stelle (7) ist um 17 °C höher als bei 3a. Die entstehende Emulsion ist inhomogen und weist grobe, gummiartige Partikel auf, die sich innerhalb eines Tages oben anreichern. Die Emulsion besitzt somit keine ausreichende Lagerstabilität. Die Teilchengröße beträgt 274 nm. Die Teilchengrößenverteilung weist mehrere Maxima auf.

## Patentansprüche

1. Diskontinuierliches Verfahren zur Herstellung von wässrigen Emulsionen (E), die Organosiliciumverbindung (A), Emulgator (B) und Wasser umfassen, bei dem in einem Emulgierbehälter aus der Organosiliciumverbindung (A), dem Emulgator (B) und Wasser durch Scherung und Umpumpen und Zurückführen in den Emulgierbehälter eine Voremulsion (V) hoher Viskosität hergestellt wird und anschliessend die Voremulsion (V) mit weiterem Wasser verdünnt wird,
wobei bei dem Verfahren die Drücke im Bereich von 0,5 bis 10 bar und die Temperaturen im Bereich von 5 bis 120°C geregelt werden,
wobei die Regelung der Drücke über die Drehzahl eines scherenden Mischers und die Umpumpgeschwindigkeit einer in Strömungsrichtung nach dem scherenden Mischer vorhandenen Pumpe und die Regelung der Temperaturen durch die Temperaturen der Rohstoffe, die Drehzahl eines scherenden Mischers und die Umpumpgeschwindigkeit einer Pumpe erfolgt.

2. Verfahren nach Anspruch 1, bei dem in einem ersten Schritt der Emulgator (B) mit Wasser zu einem Emulgator-Wassergemisch (EW) vermischt, in einem zweiten Schritt die Organosiliciumverbindung (A) zum Emulgator-Wassergemisch (EW) gegeben und durch Scherung die Voremulsion (V) hoher Viskosität hergestellt wird.

3. Verfahren nach Anspruch 1 und 2, bei dem bei der Herstellung der Voremulsion (V), höchstens 25% des gesamten in die Emulsion (E) eingebrachten Wassers eingesetzt wird.

4. Verfahren nach Anspruch 1 bis 3, bei dem die Organosiliciumverbindung (A) zu einer anderen Organosiliciumverbindung (A) umgesetzt wird.

## Claims

1. Batchwise process for the preparation of aqueous emulsions (E) which comprise organosilicon compound (A), emulsifier (B) and water, in which, in an emulsification container, a preemulsion (V) of high viscosity is prepared from the organosilicon compound (A), the emulsifier (B) and water by shearing and circulation and passing it back into the emulsification container, and the preemulsion (V) is then diluted with further water, the pressures being regulated in the range from 0.5 to 10 bar and the temperatures being regulated in the range from 5 to 120°C during the process, the regulation of the pressures being effected via the speed of a shearing mixer and the circulation rate of a pump present after the shearing mixer in the direction of flow, and the regulation of the temperatures being effected by the temperatures of the raw materials, the speed of a shearing mixer and the circulation rate of a pump.

2. Process according to Claim 1, in which, in a first step, the emulsifier (B) is mixed with water to give an emulsifier/water mixture (EW) and, in a second step, the organosilicon compound (A) is added to the emulsifier/water mixture (EW) and the preemulsion (V) of high viscosity is prepared by shearing.

3. Process according to Claims 1 and 2, in which not more than 25% of the total water introduced into the emulsion (E) is used in the preparation of the preemulsion (V).

4. Process according to any of Claims 1 to 3, in which the organosilicon compound (A) is reacted to give another organosilicon compound (A).

## Revendications

1. Procédé en mode discontinu pour la production d'émulsions aqueuses (E) qui comprennent un composé organosilicié (A), un émulsifiant (B) et de l'eau, dans lequel on prépare dans un récipient émulsionneur, à partir du composé organosilicié (A), de l'émulsifiant (B) et d'eau, par cisaillement et recirculation à l'aide d'une pompe et renvoi dans le récipient émulsionneur, une pré-émulsion (V) à haute viscosité et ensuite on dilue la pré-émulsion (V) avec une nouvelle quantité d'eau,
en réglant dans le procédé les pressions dans la plage de 0,5 à 10 bars et les températures dans la plage de 5 à 120 °C,
le réglage des pressions s'effectuant au moyen de la vitesse de rotation d'un mélangeur à cisaillement et de la vitesse de recirculation d'une pompe présente après le mélangeur à cisaillement dans le sens de l'écoulement et le réglage des températures s'effectuant au moyen des températures des matières premières, de la vitesse de rotation d'un mélangeur à cisaillement et de la vitesse de recirculation d'une pompe.

2. Procédé selon la revendication 1, dans lequel dans une première étape on mélange l'émulsifiant (B) avec de l'eau, pour obtenir un mélange d'émulsifiant-eau (EW), dans une deuxième étape on ajoute le composé organosilicié (A) au mélange d'émulsifiant-eau (EW) et on produit par cisaillement la pré-émulsion (V) à haute viscosité.

3. Procédé selon la revendication 1 et la revendication 2, dans lequel on utilise lors de la préparation de la pré-émulsion (V) au maximum 25 % de la quantité totale d'eau introduite dans l'émulsion (E).

4. Procédé selon les revendications 1 à 3, dans lequel on convertit le composé organosilicié (A) en un autre composé organosilicié (A).
